# EUROPÄISCHE PATENTSCHRIFT

(11) **EP 2 881 924 B1**
(45) Veröffentlichungstag und Bekanntmachung des Hinweises auf die Patenterteilung: **16.05.2018**
(21) Anmeldenummer: 14450049.3
(22) Anmeldetag: 27.11.2014
(51) Int. Cl.: G08G 1/01, G08G 1/08

(54) **Verfahren zur Bestimmung einer Verkehrssituation**
Method for determining a traffic situation
Procédé de détermination d'une situation de trafic

(30) Priorität: 29.11.2013 AT 9172013
(43) Veröffentlichungstag der Anmeldung: 10.06.2015
(73) Patentinhaber: Kuhn, Andreas, 5431 Kuchl (AT); Kuhn, Birgit, 5431 Kuchl (AT)
(72) Erfinder: KUHN, Andreas, 5431 Kuchl (AT); KUHN, Birgit, 5431 Kuchl (AT)
(74) Vertreter: Gibler & Poth Patentanwälte KG

(56) Entgegenhaltungen:
- EP-A1- 1 591 980
- WO-A1-01/09857
- WO-A1-01/35371
- DE-A1-102012 024 143
- DE-T5-112006 003 060

## Beschreibung

Die Erfindung betrifft ein Verfahren zur Bestimmung einer Verkehrssituation gemäß dem Patentanspruch 1.

Eine Bestimmung und Überwachung der Verkehrssituation gewinnt aufgrund des zunehmenden Verkehrs, insbesondere im urbanen Gebiet, zunehmend an Bedeutung, da der durch Staus oder zähflüssigen Verkehr verursachte volkswirtschaftliche und ökologische Schaden enorm ist, aber die Bevölkerung in lediglich einem geringen Maße bereit ist auf die Vorzüge des Individualverkehrs zu verzichten.

Die Bestimmung der Verkehrssituation kann auf unterschiedliche Weise erfolgen, beispielsweise mittels Überwachung aus der Luft, wo die Verkehrssituation, insbesondere Staus, von einem Piloten beobachtet und gemeldet werden, oder mittels ortfesten Verkehrsüberwachungsanlagen, welche die Anzahl der vorbeifahrenden Fahrzeuge abzählen.

Aus der EP 1 591 980 A1 ist ein Verfahren zur Überwachung des Verkehrs bekannt, bei welchem speziell ausgebildete Sensorenvehikel mittels Umfeldsensoren die relative Position anderer Verkehrsteilnehmer aufnehmen, sowie die eigene Position und Geschwindigkeit. Diese Daten werden dann an eine globale Verkehrsleiteinrichtung übermittelt, wobei diese Verkehrsleiteinrichtung aus diesen Daten Verkehrssituationsdaten berechnet und anhand dieser auch die Verkehrsreserven.

Aus der WO 01/09857 A1 ist ein Verfahren zum Bestimmen der Verkehrssituation bekannt, bei welchem ebenfalls speziell ausgebildete Sensorenvehikel mittels Umfeldsensoren die relative Position anderer Verkehrsteilnehmer aufnehmen, sowie die eigene Position und Geschwindigkeit.

Aus der DE 10 2012 024 143 A1 ist ein Verfahren zum Führen eines Verkehrs in einem Verkehrsnetz mit Ampeln bekannt, wobei die Ampeln für ausgewählte Routen als grüne Welle geschaltet werden. Zur Bestimmung der Verkehrssituation werden stationäre Sensoren verwendet.

Aus der DE 11 2006 003 060 T5 ist ein System zum Aktualisieren von Verkehrsdaten unter Verwendung von speziell ausgebildeten Host-Sondenfahrzeugen mit Außensensoren bekannt.

Aus der WO 01/35371 A1 ist ein Verfahren zum Bestimmen der Verkehrssituation bekannt, bei welchem speziell ausgebildete Sensorenvehlkel mittels Umfeldsensoren die relative Position anderer Verkehrsteilnehmer sowie die eigene Position und Geschwindigkeit aufnehmen.

Nachteilig an bisherigen Verfahren zur Bestimmung der Verkehrssituation ist unter anderem, dass diese sehr aufwendig sind und oft nur begrenzte Daten über die Verkehrssituation liefern.

Aufgabe der Erfindung ist es daher ein Verfahren der eingangs genannten Art anzugeben, mit welchem die genannten Nachteile vermieden werden können, und mit welchem die Bestimmung der Verkehrssituation einfach, schnell und umfassend erfolgen kann.

Erfindungsgemäß wird dies durch die Merkmale des Patentanspruches 1 erreicht.

Dadurch ergibt sich der Vorteil, dass die Verkehrssituation mit einfachen Mitteln schnell und umfassend ermittelt werden kann. Hierbei ist insbesondere vorteilhaft, dass durch einen ersten Verkehrsteilnehmer eine Vielzahl an weiteren zweiten Verkehrstailnehmarn erfasst werden können, wodurch nur ein geringer Bruchteil der Verkehrsteilnehmer für das Verfahren ausreichend ausgerüstet sein müssen, und trotzdem eine im Wesentlichen umfassende Bestimmung der Verkehrssituation erfolgen kann. Weiters kann die Situation der zweiten Verkehrsteilnehmer in einem großen Streckenabschnitt erfasst werden, wodurch auch auf den Grund eines lokalen Staus geschlossen werden kann. Beispielsweise kann dadurch bestimmt werden, ob ein lokaler Stau durch einen einzelnen zweiten Verkehrsteilnehmer verursacht wird, welcher einen Defekt haben oder eine Ladetätigkeit durchführen kann, oder ob ein lokaler Stau durch eine Verkehrsüberlastung verursacht wird. Dadurch können die ermittelten Verkehrssituationsdaten wesentlich genauer und umfangreicher sein, als bei bisherigen Verfahren, weshalb wesentlich verbesserte Prognosemöglichkeiten der Verkehrssituation erreicht werden können.

Weiters betrifft die Erfindung ein Verfahren zur Steuerung eines Verkehrsflusses mit einer Verkehrsleiteinrichtung gemäß dem Patentanspruch 8.

Aufgabe dieses Verfahrens ist eine unmittelbare und zuverlässige Steuerung des Verkehrsflusses auf einer lokalen Ebene.

Erfindungsgemäß wird dies durch die Merkmale des Patentanspruches 8 erreicht.

Dadurch kann bereits auf lokaler Ebene, insbesondere auf der Ebene einer einzelnen Signalanlage, beispielsweise einer Ampel, eine automatische Steuerung des Verkehrsflusses erreicht werden, ohne dass eine übergeordnete Verkehrsleitzentrale eingebunden werden muss.

Weiters betrifft die Erfindung eine Verkehrsleiteinrichtung zur Steuerung eines Verkehrsflusses, gemäß dem Oberbegriff des Patentanspruches 10.

Aufgabe dieser Verkehrsleiteinrichtung ist es das Verfahren zur Steuerung des Verkehrsflusses einfach und zuverlässig durchzuführen.

Erfindungsgemäß wird dies durch die Merkmale des Patentanspruches 10 erreicht.

Dadurch kann bereits auf lokaler Ebene, insbesondere auf der Ebene einer einzelnen Signalanlage, beispielsweise einer Ampel, eine automatische Steuerung des Verkehrsflusses erreicht werden, ohne dass eine übergeordnete Verkehrsleitzentrale eingebunden werden muss.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossene Zeichnung, in welchen lediglich eine bevorzugte Ausführungsform beispielhaft dargestellt ist, näher beschrieben. Dabei zeigt die Fig. eine Prinzipskizze einer bevorzugten Ausführungsform des Verfahrens.

Die Fig. zeigt eine bevorzugte Ausführungsform eines Verfahren zur Bestimmung einer Verkehrssituation. Diese Verkehrssituation kann insbesondere die aktuelle Verkehrslage des Individualverkehrs auf einem Straßenzug oder einem lokalen Bereich des Straßennetzes sein. Insbesondere kann diese Verkehrssituation die aktuelle Verkehrslage auf einem Autobahnabschnitt, einer Bundesstraße öder einem Straßen- oder Gassenabschnitt in einem urbanen Gebiet sein. Die Verkehrssituation kann insbesondere die aktuelle Verkehrstage mehrerer am Verkehrsgeschehen teilnehmenden Verkehrsteilnehmer auf einem lokalen Bereich eines Straßennetzes sein. Die Verkehrssituation kann insbesondere auch der Zustand eines Verkehrsflusses mehrerer Verkehrsteilnehmer auf einem lokalen Bereich eines Straßennetzes sein.

Die Bestimmung der Verkehrssituation kann insbesondere die Ermittlung und Abschätzung von Verkehrsreserven umfassen, wobei die Verkehrsreserven insbesondere die Dichte und Geschwindigkeit umfassen können. So kann die Verkehrsreserve das Verhältnis der aktuellen Anzahl an Fahrzeugen je Zeiteinheit zu der maximalen Anzahl an Fahrzeugen je Zeiteinheit, die einen vorgegebenen Ort passieren, umfassen. Weiters kann die Verkehrsreserve das Verhältnis der aktuellen Geschwindigkeit eines Fahrzeuges zu einer rechtlich und fahrdynamisch zulässigen maximalen Geschwindigkeit umfassen.

Es kann vorgesehen sein, dass die fahrdynamisch zulässige maximale Geschwindigkeit empirisch ermittelt wird. So kann aus den in einer Kurve gemessenen Geschwindigkeiten näherungsweise auf die maximale Geschwindigkeit rückgeschlossen werden, mit der diese Kurve durchfahren werden kann. Dabei kann auch die aktuelle Wetterlage berücksichtigt werden, da die maximale Geschwindigkeit bei trockener und nasser Fahrbahn oftmals unterschiedlich sein wird.

Vorgesehen ist, dass von einer Sensoreinheit 1 eines ersten Verkehrsteilnehmers 2 Sensordaten der Relativbewegung zweiter Verkehrsteilnehmer 3 gemessen werden. Der erste Verkehrsteilnehmer 2 und/oder die zweiten Verkehrsteilnehmer 3 können insbesondere Kraftfahrzeuge sein, besonders bevorzugt Kraftfahrzeuge des Individualverkehrs, beispielsweise PKW oder LKW. Hierbei kann insbesondere vorgesehen sein, dass der erste Verkehrsteilnehmer 2 und/oder der zweite Verkehrsteilnehmer 3 aktiv am Verkehr teilnehmen. Die Sensoreinheit 1 kann insbesondere Teil der Bordelektrik des ersten Verkehrsteilnehmers 2 sein. Die Sensoreinheit 1 kann hierbei unterschiedlich ausgebildet und nach unterschiedlichen Prinzipien funktionieren. Insbesondere kann die Sensoreinheit 1 derart ausgebildet sein, dass die Sensoreinheit 1 umgebende Objekte mittels Licht, beispielsweise als Kamera, als Lidar oder als PMD-Sensor, mittels Radar oder mittels Ultraschall erfasst. Die zweiten Verkehrsteilnehmer 3 werden von der Sensoreinheit 1 erfasst, wobei die Sensoreinheit 1 Sensordaten über die Relativbewegung der zweiten Verkehrsteilnehmer 3 zur Sensoreinheit 1, und damit auch zum ersten Verkehrsteilnehmer 2, ausgibt. Die Sensordaten können insbesondere digital aufbereitet sein.

Weiters können die Sensordaten auch weitere Informationen über ein erfasstes Objekt; welche einen zweiten Verkehrsteilnehmer 3 darstellen kann, enthalten, beispielsweise die Größe, Form und/oder den Abstand, in welchem ein Objekt die Sensoreinheit 1 passiert hat. Dadurch kann von den Sensordaten darauf geschlossen werden, ob es sich um einen zweiten Verkehrsteilnehmer 3 handelt oder um ein anderes Objekt handelt, beispielsweise eine Verkehrstafel.

Weiters ist vorgesehen, dass einer Auswerteeinheit 4 des ersten Verkehrsteilnehmers 2 Bewegungsdaten des ersten Verkehrsteilnehmers 2 zugeführt werden. Die Auswerteeinheit 4 kann insbesondere Teil der Bordelektronik des ersten Verkehrsteilnehmers 2 sein.Die Auswerteeinheit 4 kann hierbei ein eigenständiges Modul im ersten Verkehrsteilnehmer 2 sein. Insbesondere kann vorgesehen sein, dass die Auswerteeinheit 4 in einem Bordcomputer des ersten Verkehrsteilnehmers 2 integriert ist. Die Bewegungsdaten des ersten Verkehrsteilnehmers 2 können insbesondere die aktuelle Geschwindigkeit des ersten Verkehrsteilnehmers 2 umfassen. Weiters kann insbesondere auch der Ort und/oder die Bewegungsrichtung des ersten Verkehrsteilnehmers 2, welche insbesondere mittels GPS ermittelt werden können, in den Bewegungsdaten des ersten Verkehrsteilnehmers 2 enthalten sein.

In einem weiteren Schritt ist vorgesehen, dass von der Auswerteeinheit 4 basierend auf den Sensordaten und den Bewegungsdaten Verkehrssituationsdaten ermittelt werden. Der Auswerteeinheit 4 werden hierfür insbesondere die Sensordaten und die Bewegungsdaten zugeführt. Die Sensordaten und/oder die Bewegungsdaten können weiters, bevor diese der Auswerteeinheit 4 zugeführt werden, aufbereitet werden, beispielsweise durch einen Filter. Ausgehend von den Sensordaten und den Bewegungsdaten kann die Verkehrslage der zweiten Verkehrsteilnehmer 3, beispielsweise deren Richtung, deren Geschwindigkeit und/oder deren Verkehrsdichte, von der Auswerteeinheit 4 ermittelt werden.

Weiters ist vorgesehen, dass die Verkehrssituationsdaten mittels einer Übermittlungseinheit 5 des ersten Verkehrsteilnehmers 2 an eine Verkehrsleiteinrichtung 6 übermittelt werden. Die Verkehrsleiteinrichtung 6 kann insbesondere eine ortsfeste Einrichtung zur Überwachung und/oder Steuerung des Verkehrs sein. Die Verkehrsleiteinrichtung 6 kann vom ersten Verkehrsteilnehmer 2 und/oder vom zweiten Verkehrsteilnehmer örtlich getrennt ist. Beispielsweise kann die Verkehrsleiteinrichtung 6 eine Verkehrsleitzentrale oder eine Signalanlage, beispielsweise eine Ampel sein. Diese Übermittlung der Verkehrssituationsdaten kann insbesondere mittels Funk erfolgen.

Dadurch ergibt sich der Vorteil, dass die Verkehrssituation mit einfachen Mitteln schnell und umfassend ermittelt werden kann. Hierbei ist insbesondere vorteilhaft, dass durch einen ersten Verkehrsteilnehmer 2 eine Vielzahl an weiteren zweiten Verkehrsteilnehmern 3 erfasst werden können, wodurch nur ein geringer Bruchteil der Verkehrsteilnehmer für das Verfahren ausreichend ausgerüstet sein müssen, und trotzdem eine im Wesentlichen umfassende Bestimmung der Verkehrssituation erfolgen kann. Weiters kann die Situation der zweiten Verkehrsteilnehmer 3 in einem großen Streckenabschnitt erfasst werden, wodurch auch auf den Grund eines lokalen Staus geschlossen werden kann. Beispielsweise kann dadurch bestimmt werden, ob ein lokaler Stau durch einen einzelnen zweiten Verkehrsteilnehmer 3 verursacht wird, welche einen Defekt haben oder eine Ladetätigkeit durchführen kann, oder ob ein lokaler Stau durch eine Verkehrsüberlastung verursacht wird.

Dadurch können die ermittelten Verkehrssituationsdaten wesentlich genauer und umfangreicher sein, als bei bisherigen Verfahren, weshalb wesentlich verbesserte Prognosemöglichkeiten der Verkehrssituation erreicht werden können.
Durch die Beobachtung anderer Fahrzeuge kann eine hohe Genauigkeit der Bestimmung der Verkehrssituation erreicht werden, welche aus einer Zusammenschau der Eigenbewegungen mehrerer Fahrzeuge nicht erreicht werden kann, da dort Zusammenhänge schwerer erkennbar sind.
In der Fig. ist ein Beispiel einer besonders bevorzugten Ausführungsform des Verfahrens dargestellt, wobei in der aktuell dargestellten Situation ein erster Verkehrsteilnehmer 2 auf einer geraden zweispurigen Straße 9 mit Gegenverkehr angeordnet ist. In der dargestellten Situation befinden sich vier zweite Verkehrsteilnehmer 3 auf einer Gegenfahrbahn. Erfindungsgemäß wird es vorgesehen, dass die Sensordaten mittels wenigstens eines Umfeldsensors 7 eines Fahrerassistenzsystems des ersten Verkehrsteilnehmers 2 ermittelt werden. Derartige Fahrerassistenzsysteme mit einer Umfeldsensorik können beispielsweise Spurwechselassistenten, Einparkhilfen, Totwinkel-Überwachung, automatische Abstandswarner, Verkehrszeichen-Erkennungsassistenten, und/oder automatische Notbremssysteme sein. Derartige Fahrerassistenzsysteme sind in einer Vielzahl neuartiger Fahrzeuge bereits vorhanden, wodurch das vorteilhafte Verfahren auf bereits vorhandene und mehrfach genutzte Sensoreinrichtungen 1 zurückgreifen kann.
Insbesondere kann vorgesehen sein, dass durch die Sensoreinheit 1 mehrere Sensorbereiche 13 in der Umgebung des ersten Verkehrsteilnehmers 2 abgetastet werden, wodurch eine bessere Erfassung der zweiten Verkehrsteilnehmer 3 erreicht werden kann. Hierbei können die Sensordaten insbesondere aus den Informationen von mehreren Sensoren zusammengesetzt sein.
Besonders bevorzugt kann vorgesehen sein, dass die Sensordaten in einem Gegenverkehrsbereich 8 im Umfeld des ersten Verkehrsteilnehmers 2 ermittelt werden. Ein derartiger Gegenverkehrsbereich 8 kann insbesondere jener Bereich vom ersten Verkehrsteilnehmer 2 sein, bei welchem bei der Fahrt des ersten Verkehrsteilnehmers 2 auf einer geraden Straße 9 mit Gegenverkehr zu rechnen ist. Der Gegenverkehrsbereich 8 kann insbesondere der Bereich des Umfeldes des ersten Verkehrsteilnehmers 2 auf der Fahrerseite sein. Insbesondere kann vorgesehen sein, dass als Sensordaten lediglich die Daten von jenen Sensorbereichen 13 der Sensoreinheit 1 verwendet werden, welche Sensorbereiche 13 zumindest einen Teil des Gegenverkehrsbereiches 8 abtasten. Dadurch kann die Menge der zu verarbeitenden Sensordaten auf jene Sensorbereiche 13 beschränkt werden, bei welchen mit besonders vielen zweiten Verkehrsteilnehmer 3 zu rechnen ist, da ein erster Verkehrsteilnehmer 2 auf einer Fahrt in der Regel viel öfter zweite Verkehrsteilnehmer 3 aus dem Gegenverkehr passiert, als zweite Verkehrsteilnehmer 3 in der gleichen Fahrtrichtung. Wenn lediglich die Sensordaten von dem Gegenverkehrsbereich 8 im Umfeld des ersten Verkehrsteilnehmers 2 verwendet werden, kann die Menge der Sensordaten, welche beispielsweise durch Lichtmasten oder parkende Fahrzeuge verursacht wird, gering gehalten werden.

Gemäß der bevorzugten Ausführungsform des Verfahrens in der Fig. werden zwei Sensorbereiche 13 verwendet, nämlich ein nach vorne gerichteter erster Sensorbereich 13,14 und ein seitlich gerichteter zweiter Sensorbereich 13,15, wobei als zweiter Sensorbereich 13, 15 ein Sensorbereich 13 auf der Fahrerseite verwendet wird. Die Fahrerseite ist jene Seite eines Fahrzeuges, welches in der Regel dem Gegenverkehr zugewandt ist. Hierbei kann der erste Sensorbereich 13,14 beispielsweise ein Sensorbereich 13 eines automatischen Abstandsensors sein, während der zweiter Sensorbereich 13,15 insbesondere von einer Totwinkel-Überwachung stammt.

In der Fig. sind vier zweite Verkehrsteilnehmer 3 dargestellt, wobei ein zweiter Verkehrsteilnehmer 3 außerhalb der Sensorbereiche ist 13, ein zweiter Verkehrsteilnehmer 3 im ersten Sensorbereich 10,14 ist, ein weiterer zweiter Verkehrsteilnehmer 3 den ersten Sensorbereich 10,14 verlässt und in den zweiten Sensorbereich 13,15 eindringt, und ein zweiter Verkehrsteilnehmer 3 den zweiten Sensorbereich 13,15 verlässt. Durch die Kombination der beiden Sensorbereiche 13,14,15 können in einem weiten Bereich zuverlässig die zweiten Verkehrsteilnehmer 3 erfasst werden.

Besonders bevorzugt kann vorgesehen sein, dass von der Auswerteeinheit 4 aus den Sensordaten und den Bewegungsdaten Absolutbewegungen 10 der zweiten Verkehrsteilnehmer 3 ermittelt werden. Hierbei enthalten die Sensordaten die Relativbewegungen der zweiten Verkehrsteilnehmer 3 zum ersten Verkehrsteilnehmer, während die Bewegungsdaten insbesondere die Absolutbewegung 16 des ersten Verkehrsteilnehmers 2 enthalten kann. Daraus kann dann auf die Absolutbewegungen 10 der zweiten Verkehrsteilnehmer 3 geschlossen werden. Durch die Absolutbewegungen 10 der zweiten Verkehrsteilnehmer 3 kann bereits auf die Verkehrssituation geschlossen werden, da beispielsweise bei langsamen Absolutbewegungen 10 der zweiten Verkehrsteilnehmer 3 auf einen zähen Verkehr geschlossen werden kann.

Insbesondere kann vorgesehen sein, dass durch die Absolutbewegungen 10 die dem Gegenverkehr zuordenbaren zweiten Verkehrsteilnehmer 3 bestimmt werden, und dass im weiteren Verfahren lediglich die dem Gegenverkehr zuordenbaren zweiten Verkehrsteilnehmer 3 verwendet werden. Dadurch können lediglich die Sensordaten der zweiten Verkehrsteilnehmer 3 für die Bewertung der Verkehrssituation herangezogen werden, welche am häufigsten den ersten Verkehrsteilnehmer 2 passieren, und bei welchen beispielsweise die Abstände zueinander am besten messbar sind.

Besonders bevorzugt kann vorgesehen sein, dass als Verkehrssituationsdaten die Absolutbewegungen 10 der zweiten Verkehrsteilnehmer 3 verwendet werden. Dadurch kann eine sehr detaillierte Information über die Verkehrssituation bereitgestellt werden, aus welcher mittels statistischer Verfahren eine Vielzahl an Informationen gewonnen werden kann, da die Absolutbewegungen 10 der einzelnen zweiten Verkehrsteilnehmer 3 für eine weitere tiefe Analyse zur Verfügung gestellt werden.

Insbesondere können Verkehrsreserven ermittelt werden. Durch die Ermittlung der Verkehrsreserven können Stellen mit geringen Verkehrsreserven einfach erkannt werden, wobei durch geeignete Maßnahmen, beispielsweise einer Veränderung der Ampelschaltungen, die Verkehrsreserven erhöht werden können. Es hat sich gezeigt, dass dadurch drohende Verkehrsstaus bereits in der Ausbildungsphase des Verkehrsstaus vermieden werden können.

Dadurch können auch die Möglichkeiten und Auswirkungen von verkehrspolitischen und/oder planerischen Maßnahmen ermittelt werden.

Weiters können neben einer Überwachung der Verkehrslage auch die Häufigkeit einer Überschreitung der Geschwindigkeitsbegrenzung durch zweite Verkehrsteilnehmer 3 auf einem bestimmten Streckenabschnitt von einer übergeordneten Verkehrsleitzentrale bestimmt werden, wodurch gezielte Schwerpunktkontrollen an diesem Streckenabschnitt durchgeführt werden können.

Alternativ kann vorgesehen sein, dass von der Auswerteeinheit 4 mittels der Absolutbewegungen 10 der zweiten Verkehrsteilnehmer 3, und insbesondere wenigstens eines Bewertungskriteriums, wenigstens eine statistische Verkehrsgröße erstellt wird, und dass die wenigstens eine statistische Verkehrsgröße als Verkehrssituationsdaten verwendet wird. Dadurch kann die Datenmenge, welche an die Verkehrsleiteinrichtung 6 übermittelt wird, wesentlich reduziert werden.

Die statistische Verkehrsgröße kann beispielsweise die durchschnittliche Geschwindigkeit und/oder die Verkehrsdichte der zweiten Verkehrsteilnehmer 3 sein.

Unter Verwendung des wenigstens einen Bewertungskriteriums kann auch ein vordefinierter Zustand als statistische Verkehrsgröße erstellt werden. Das wenigstens eine Bewertungskriterium dient hierbei der Zuordnung einer statistischen Verkehrsgröße zu der Menge an erfassten Absolutbewegungen 10 der zweiten Verkehrsteilnehmer 3. Hierbei kann anhand der Absolutbewegungen 10 und dem wenigstens einen Bewertungskriterium eine die aktuelle Verkehrssituation widerspiegelnde statistische Verkehrsgröße aus einer vorgegebenen Anzahl vordefinierter Zustände ausgewählt werden. Diese Zustände können beispielsweise "Stau", "zäher Verkehr" und/oder "flüssiger Verkehr" sein. Weiters können diese vordefinierten Zustände weiter unterteilt werden, beispielsweise ob der Stau von einer Verkehrsüberlastung oder durch einen stehen gebliebenen zweiten Verkehrsteilnehmer 3 verursacht wird.

Diese statistische Verkehrsgröße, oder eine Zusammenstellung derartiger statistischer Verkehrsgrößen können dann mittels der Übermittlungseinheit 5 des ersten Verkehrsteilnehmers 2 an die Verkehrsleiteinrichtung 6 übermittelt werden.

Besonders bevorzugt kann vorgesehen sein, dass die Verkehrssituationsdaten von der Übermittlungseinheit 5 mittels eines Fahrzeug-Ad-hoc-Netzwerkes vom ersten Verkehrsteilnehmer 2 an die Verkehrsleiteinrichtung 6 übermittelt werden. Ein Fahrzeug-Ad-hoc-Netzwerkes, oft auch als VANet bezeichnet, ist ein mobiles Ad-hoc-Netz (MANet) dessen Knoten in der Regel die einzelnen Verkehrsteilnehmer 2,3 sind. Besonders bevorzugt kann als VANet eine Car-to-Car-Communication-Implementierung und/oder einer Car-to-Infrastructure-Communication-Implementierung, welche auch als Car2X Implementierung bezeichnet werden, verwendet werden. Dadurch kann die Sendeleistung oder der Aufwand an zusätzlicher Infrastruktur für die Übermittlung gering gehalten werden.

Weiters kann insbesondere ein Verfahren zur Steuerung eines Verkehrsflusses mit einer Verkehrsleiteinrichtung 6, insbesondere mit einer Signalanlage, vorgesehen sein, wobei die Verkehrsleiteinrichtung 6 eine Steuereinheit 11 umfasst, wobei der Steuereinheit 11 Verkehrssituationsdaten zugeführt werden, welche Verkehrssituationsdaten zumindest zum Teil mittels des vorstehend beschriebenen Verfahrens übermittelt werden, wobei von der Steuereinheit 11 die empfangenen Verkehrssituationsdaten verarbeitet und zur Steuerung des Verkehrsflusses verwendet werden. Dadurch können die gewonnenen Verkehrssituationsdaten unmittelbar auf lokaler Ebene verwendet werden, ohne das eine Übertragung bis auf die Ebene einer Verkehrsleitzentrale notwendig ist.

Bei der Verarbeitung der Verkehrsdaten von der Verkehrsleiteinrichtung 6 können Verkehrsreserven ermittelt werden. Diese Verkehrsreserven können zur Steuerung des Verkehrsflusses verwendet werden.

Die Verkehrsleiteinrichtung 6 kann insbesondere eine Signalanlage sein, beispielsweise eine Ampel an einer Straßenkreuzung, welche durch, insbesondere optische, Signale den Verkehrsfluss in wenigstens einer Richtung vorgebbar unterbricht und freigibt. Insbesondere in einem urbanen Gebiet sind bei einem starken Verkehr derartige Verkehrsleiteinrichtung 6 neuralgische Punkte, vor denen es häufig zu einem Stau kommt.

Durch die Übermittelung der Verkehrssituationsdaten kann die Steuereinheit 11 der Verkehrsleiteinrichtung 6 unter Berücksichtigung der aktuellen, und insbesondere lokalen, Verkehrslage den Verkehrsfluss steuern. Wenn beispielsweise vor einer Ampel an einer Straßenkreuzung der Verkehr in einer Fahrtrichtung staut, kann die Grünphase für diese Fahrtrichtung verlängert werden.

Insbesondere können die Verkehrssituationsdaten von jenen ersten Verkehrsteilnehmern 2 an die Verkehrsleiteinrichtung 6 übermittelt werden, welche in der aktuellen Grünphase die betreffende Verkehrsleiteinrichtung 6 passiert haben, und somit den wartenden Gegenverkehr vor der betreffenden Verkehrsleiteinrichtung 6 passieren. Dadurch kann die Verkehrsleiteinrichtung 6 die aktuelle Verkehrslage in unmittelbarer Umgebung erfassen, wodurch die Steuerung der Verkehrsleiteinrichtung 6 optimal auf die aktuell vorherrschende lokale Verkehrslage angepasst werden kann.

In der Fig. ist beispielsweise eine als Ampel ausgebildete Verkehrsleiteinrichtung 6 auf der Seite des Gegenverkehrs des ersten Verkehrsteilnehmers 2 angeordnet, wobei die zweiten Verkehrsteilnehmer 3 auf die Verkehrsleiteinrichtung 6 zufahren. Mit dem Verfahren werden nun alle zweiten Verkehrsteilnehmer 3 vom ersten Verkehrsteilnehmer 2 erfasst und die betreffenden Verkehrssituationsdaten an die Verkehrsleiteinrichtung 6 übermittelt. Dadurch kann die Verkehrsleiteinrichtung 6 in Abhängigkeit der aktuellen Verkehrssituationsdaten den Verkehrsfluss der zweiten Verkehrsteilnehmer 3 steuern, und somit einen unnötigen Stau verhindern.

Zur Durchführung dieses Verfahrens kann insbesondere bei einer Verkehrsleiteinrichtung 6 zur Steuerung eines Verkehrsflusses, wobei die Verkehrsleiteinrichtung 6 eine Empfangseinheit 12 und eine Steuereinheit 11 umfasst, vorgesehen sein, dass die Empfangseinheit 12 zum Empfangen von Verkehrssituationsdaten, welche Verkehrssituationsdaten mittels eines hier beschriebenen Verfahrens zur Bestimmung einer Verkehrssituation übermittelt werden, vorgesehen ist, dass die Empfangseinheit 12 ausgangsseitig zum Zuführen der Verkehrssituationsdaten mit einem Eingang der Steuereinheit 11 verbunden ist, und dass die Steuereinheit 12 vorgesehen ist unter Verwendung der Verkehrssituationsdaten den Verkehrsfluss zu steuern.

Dadurch kann bereits auf lokaler Ebene, insbesondere auf der Ebene einer einzelnen Verkehrsleiteinrichtung 6, beispielsweise einer Ampel, eine automatische Steuerung des Verkehrsflusses erreicht werden, ohne dass eine übergeordnete Verkehrsleitzentrale eingebunden werden braucht. Dadurch kann auch die Zeit, welche die Verkehrsleiteinrichtung 6 braucht um auf eine Änderung der Verkehrslage zu reagieren, gering gehalten.

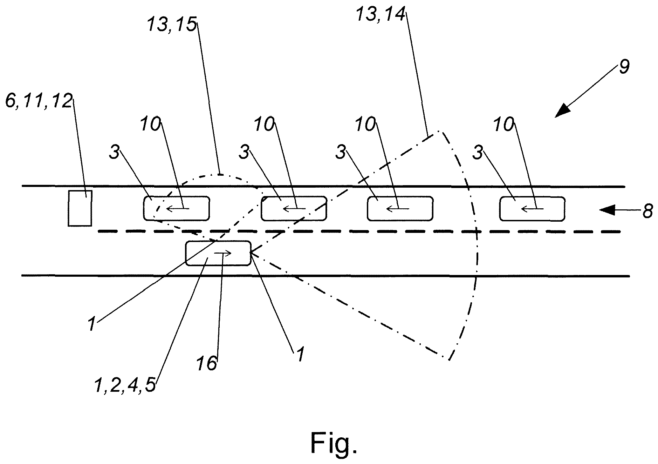

## Patentansprüche

1. Verfahren zur Bestimmung einer Verkehrssituation, wobei
- von einer Sensoreinheit (1) eines ersten Verkehrsteilnehmer (2) Sensordaten der Relativbewegung zweiter Verkehrsteilnehmer (3) gemessen werden, wobei die Sensordaten mittels wenigstens eines Umfeldsensors (7) eines Fahrerassistenzsystems des ersten Verkehrsteilnehmers (2) ermittelt werden,
- einer Auswerteeinheit (4) des ersten Verkehrsteilnehmers (2) Bewegungsdaten des ersten Verkehrsteilnehmers (2) zugeführt werden,
- von der Auswerteeinheit (4) basierend auf den Sensordaten und den Bewegungsdaten Verkehrssituationsdaten ermittelt werden,
- die Verkehrssituationsdaten mittels einer Übermitttungseinheit (5) des ersten Verkehrsteilnehmers (2) an eine Verkehrsleiteinrichtung (6) übermittelt werden.

2. Verfahren zur Bestimmung der Verkehrssituation nach Anspruch 1, **dadurch gekennzeichnet,** von der Verkehrsleiteinrichtung (6) Verkehrsreserven ermittelt werden.

3. Verfahren zur Bestimmung der Verkehrssituation nach Anspruch 1, oder 2, **dadurch gekennzeichnet, dass** die Sensordaten in einem Gegenverkehrsbereich (8) im Umfeld des ersten Verkehrsteilnehmers (2) ermittelt werden.

4. Verfahren zur Bestimmung der Verkehrssituation nach einem der Ansprüche 1 bis 3, **dadurch gekennzeichnet, dass** von der Auswerteeinheit (4) aus den Sensordaten und den Bewegungsdaten Absolutbewegungen (10) der zweiten Verkehrsteilnehmer (3) ermittelt werden.

5. Verfahren zur Bestimmung der Verkehrssituation nach Anspruch 4, **dadurch gekennzeichnet, dass** als Verkehrssituationsdaten die Absolutbewegungen (10) der zweiten Verkehrsteilnehmer (3) verwendet werden.

6. Verfahren zur Bestimmung der Verkehrssituation nach Anspruch 4, **dadurch gekennzeichnet, dass** von der Auswerteeinheit (4) mittels den Absolutbewegungen (10) der zweiten Verkehrsteilnehmer (3), und insbesondere wenigstens eines Bewertungskriteriums, wenigstens eine statistische Verkehrsgröße erstellt wird, und dass die wenigstens eine statistische Verkehrsgröße als Verkehrssituationsdaten verwendet wird.

7. Verfahren zur Bestimmung der Verkehrssituation nach einem der Ansprüche 1 bis 6, **dadurch gekennzeichnet, dass** die Verkehrssituationsdaten von der Übermittlungseinheit (5) mittels eines Fahrzeug-Ad-hoc-Netzwerkes, insbesondere mittels einer Car-to-Infrastructure-Communication-Implementierung, vom ersten Verkehrsteilnehmer (2) an die Verkehrsleiteinrichtung (6) übermittelt werden.

8. Verfahren zur Steuerung eines Verkehrsflusses mit einer Verkehrsleiteinrichtung (6), insbesondere mit einer Signalanlage, wobei die Verkehrsleiteinrichtung (6) eine Steuereinheit (11) umfasst, wobei der Steuereinheit (11) Verkehrssituationsdaten zugeführt werden, welche Verkehrssituationsdaten zumindest zum Teil mittels eines Verfahrens nach einem der Ansprüche 1 bis 7 übermittelt werden, wobei von der Steuereinheit (11) die empfangenen Verkehrssituationsdaten verarbeitet und zur Steuerung des Verkehrsflusses verwendet werden.

9. Verfahren nach Anspruch 8, **dadurch gekennzeichnet, dass** bei der Verarbeitung der Verkehrsdaten von der Verkehrsleiteinrichtung (6) Verkehrsreserven ermittelt werden.

10. Verkehrsleiteinrichtung (6) zur Steuerung eines Verkehrsflusses, wobei die Verkehrsleiteinrichtung (6) eine Empfangseinheit (12) und eine Steuereinheit (11) umfasst, **dadurch gekennzeichnet, dass** die Empfangseinheit (12) zum Empfangen von Verkehrssituationsdaten, welche Verkehrssituationsdaten mittels eines Verfahrens nach einem der Ansprüche 1 bis 6 übermittelt werden, vorgesehen ist, dass die Empfangseinheit (12) ausgangsseitig zum Zuführen der Verkehrssituationsdaten mit einem Eingang der Steuereinheit (11) verbunden ist, und dass die Steuereinheit (12) vorgesehen ist unter Verwendung der Verkehrssituationsdaten den Verkehrsfluss zu steuern.

## Claims

1. Method for determining a traffic situation, wherein
- sensor data of the relative movement of second traffic participants (3) are measured by a sensor unit (1) of a first traffic participant (2), wherein the sensor data are determined by means of at least one environment sensor (7) of a driver assistance system of the first traffic participant (2),
- movement data of the first traffic participant (2) are supplied to an evaluation unit (4) of the first traffic participant (2),
- traffic situation data are determined by the evaluation unit (4) based on the sensor data and the movement data,
- the traffic situation data are transmitted to a traffic control device (6) by means of a transmission unit (5) of the first traffic participant (2).

2. Method for determining the traffic situation according to claim 1, **characterized in that** traffic reserves are determined by the traffic control device (6).

3. A method for determining the traffic situation according to claim 1, or 2, **characterized in that** the sensor data are determined in an oncoming traffic area (8) in the environment of the first traffic participant (2).

4. Method for determining the traffic situation according to one of the claims 1 to 3, **characterized in that** absolute movements (10) of the second traffic participants (3) are determined by the evaluation unit (4) from the sensor data and the movement data.

5. Method for determining the traffic situation according to claim 4, **characterized in that** the absolute movements (10) of the second traffic participants (3) are used as the traffic situation data.

6. Method for determining the traffic situation according to claim 4, **characterized in that** at least one statistical traffic quantity is generated by the evaluation unit (4) by means of the absolute movements (10) of the second traffic participants (3), and in particular of at least one evaluation criterion, and that the at least one statistical traffic quantity is used as traffic situation data.

7. Method for determining the traffic situation according to one of the claims 1 to 6, **characterized in that** the traffic situation data are transmitted from the transmission unit (5) by means of a vehicle ad hoc network, in particular by means of a car-to-infrastructure communication implementation, from the first traffic participant (2) to the traffic control device (6),

8. Method for controlling a traffic flow with a traffic control device (6), in particular with a signal system, wherein the traffic control device (6) comprises a control unit (11), wherein traffic control data are supplied to control unit (11), which traffic situation data are at least partially transmitted by means of a method according to of the claims 1 to 7, wherein the received traffic situation data are processed by the control unit (11) and are used to control the traffic flow.

9. Method according to Claim 8, **characterized in that** traffic reserves are determined by the traffic control device (6) during the processing of the traffic data.

10. Traffic control device (6) for controlling a traffic flow, wherein the traffic control device (6) comprises a receiving unit (12) and a control unit (11), **characterized in that** the receiving unit (12) is provided for receiving traffic situation data, which traffic situation data are transmitted by a method according to one of claims 1 to 6, that the receiving unit (12) is connected on the output side for supplying the traffic situation data to an input of the control unit (11), and that the control unit (12) is provided to control the traffic flow by using the traffic situation data.

## Revendications

1. Procédé pour la détermination d'une situation du trafic, dans lequel
- une unité de capteur (1) d'un premier véhicule en circulation (2) mesure des données de capteur du déplacement relatif de deuxièmes véhicules en circulation (3), lesquelles données de capteur sont acquises au moyen d'au moins un capteur d'environnement (7) d'un système d'assistance à la conduite du premier véhicule en circulation (2),
- des données de déplacement du premier véhicule en circulation (2) sont transmises à une unité d'analyse (4) du premier véhicule en circulation (2),
- l'unité d'analyse (4) détermine, sur la base des données de capteur et des données de déplacement, des données sur la situation du trafic,
- les données sur la situation du trafic sont transmises à une installation de contrôle du trafic (6) au moyen d'une unité de transmission (5) du premier véhicule en circulation (2).

2. Procédé pour la détermination de la situation du trafic selon la revendication 1, **caractérisé en ce que** l'installation de contrôle du trafic (6) détermine des réserves de circulation.

3. Procédé pour la détermination de la situation du trafic selon la revendication 1 ou 2, **caractérisé en ce que** les données de capteur sont déterminées dans une zone de circulation en sens inverse (8) dans l'environnement du premier véhicule en circulation (2).

4. Procédé pour la détermination de la situation du trafic selon l'une des revendications 1 à 3, **caractérisé en ce que** l'unité d'analyse (4) détermine, à partir des données de capteur et des données de déplacement, des déplacements absolus (10) des deuxièmes véhicules en circulation (3).

5. Procédé pour la détermination de la situation du trafic selon la revendication 4, **caractérisé en ce que** les déplacements absolus des deuxièmes véhicules en circulation (3) sont utilisés comme données sur la situation du trafic.

6. Procédé pour la détermination de la situation du trafic selon la revendication 4, **caractérisé en ce que** l'unité d'analyse (4) établit, au moyen des déplacements absolus (10) des deuxièmes véhicules en circulation (3) et en particulier d'au moins un critère de déplacement, au moins une grandeur statistique du trafic, et **en ce que** l'au moins une grandeur statistique du trafic est utilisée comme données sur la situation du trafic.

7. Procédé pour la détermination de la situation du trafic selon l'une des revendications 1 à 6, **caractérisé en ce que** les données sur la situation du trafic sont transmises par l'unité de transmission (5) à l'installation de contrôle du trafic (6) à l'aide d'un réseau de bord *ad hoc,* en particulier au moyen d'une implémentation de communication entre véhicule et infrastructure routière (*car-to-infrastructure*) entre le premier véhicule en circulation (2) et l'installation de contrôle du trafic (6).

8. Procédé pour le contrôle d'un flux de trafic avec une installation de contrôle du trafic (6), en particulier une installation de signalisation, dans lequel l'installation de contrôle du trafic (6) comprend une unité de contrôle (11), dans lequel l'unité de contrôle (11) reçoit des données de situation de trafic qui sont transmises, au moins en partie, au moyen d'un procédé selon l'une des revendications 1 à 7, dans lequel l'unité de contrôle (11) traite les données sur la situation du trafic reçues et les utilise pour contrôler le flux du trafic.

9. Procédé selon la revendication 8, **caractérisé en ce que** des réserves de circulation sont déterminées lors du traitement des données de trafic par l'installation de contrôle du trafic (6).

10. Installation de contrôle du trafic (6) pour le contrôle d'un flux de trafic, l'installation de contrôle du trafic (6) comprenant une unité de réception (12) et une unité de contrôle (11), **caractérisée en ce que** l'unité de réception (12) est conçue pour recevoir des données sur la situation du trafic qui sont transmises au moyen d'un procédé selon l'une des revendications 1 à 6,
**en ce que** l'unité de réception (12) est connectée en sortie à une entrée de l'unité de contrôle (11) pour acheminer les données sur la situation du trafic et **en ce que** l'unité de contrôle (12) est conçue pour réguler le flux du trafic en utilisant les données sur la situation du trafic.
